# EUROPÄISCHE PATENTSCHRIFT

(11) **EP 2 271 537 B1**
(45) Veröffentlichungstag und Bekanntmachung des Hinweises auf die Patenterteilung: **03.10.2012**
(21) Anmeldenummer: 09738029.9
(22) Anmeldetag: 21.04.2009
(51) Int. Cl.: B62B 7/08

(54) **ZUSAMMENKLAPPBARER SCHIEBEWAGEN FÜR KINDER UND/ODER PUPPEN**
COLLAPSIBLE PUSH CAR FOR CHILDREN AND/OR DOLLS
POUSSETTE REPLIABLE POUR ENFANTS ET/OU POUPÉES

(30) Priorität: 28.04.2008 DE 102008002834
(43) Veröffentlichungstag der Anmeldung: 12.01.2011
(73) Patentinhaber: Schiel GmbH, 96465 Neustadt (DE)
(72) Erfinder: HEINEMANN, Klaus, 06712 Zeitz (DE); WESTLIN, Martin, 96465 Neustadt (DE)
(74) Vertreter: Pröll, Jürgen
(86) Internationale Anmeldenummer: PCT/EP2009/054699
(87) Internationale Veröffentlichungsnummer: WO 2009/132985

(56) Entgegenhaltungen:
- EP-A- 0 090 668
- EP-A- 1 762 459
- WO-A-2005/108181
- DE-A1- 10 018 693
- US-B1- 7 077 420

## Beschreibung

Die Erfindung betrifft einen zusammenklappbaren Schiebewagen für Kinder und/oder Puppen mit einem Wagengestell mit den im Oberbegriff des Anspruchs 1 angegebenen Merkmalen.

Aus der EP 0 090 668 A1 ist ein zusammenklappbarer Schiebewagen der gattungsgemäßen Art bekannt, bei dem zwischen den seitlichen Schwenklagern für die Schiebestangen und dem Schwenklager für die hintere Stützstrebe ein Koppelgetriebe in Form von ineinandergreifenden Zahnsegmenten vorgesehen ist, dessen Verzahnungen in allen Verschwenkstellungen des Schiebebügels miteinander in Eingriff stehen.

Aus der DE 100 18 693 ist ein zusammenklappbarer Kindersportwagen bekannt, bei dem die seitlichen, über einen Bügel verbundenen Schiebestangen jeweils mit einem drehbar gelagerten Zahnsegment verbunden sind, das Bestandteil eines Koppelgetriebes ist und in Eingriff mit einem Zahnsegment steht, das verschwenkbar im gleichen Drehgelenkgehäuse angeordnet ist und an welchem hintere Stützstreben des Kinderwagens angeordnet sind. Durch Vorschwenken des Schiebebügels in Richtung der vorderen Stützstreben des Kinderwagengestells erfolgt eine Bewegungstransformation, bei der die hinteren Stützstreben in Richtung der vorderen Stützstreben verschwenken. Eine Verstellung des Schiebebügels in der Weise, dass in Bezug auf den Kinderwageneinsatz die Blickrichtung um 180° verstellbar ist, ist nicht vorgesehen.

Aus der US 7,077,420 B1 ist ein dreirädriger Kindersportwagen bekannt, bei dem die hinteren Stützstreben jeweils an einem Seilrad befestigt sind, das drehbar in einem Drehgelenkgehäuse angeordnet ist. Das umlaufende Seilrad ist über ein weiteres kleineres Seilrad in Form einer Achtlegung geführt, an welchem kleineren Seilrad der Schiebebügel befestigt ist. Wenn der Schiebebügel nach hinten über die hinteren Stützstreben geschwenkt wird, werden diese nach vorheriger Entriegelung einer Aufstellsicherung in Richtung des Vorderrades verschwenkt. Die Bewegungsübertragung über den Seilantrieb ist gegen Durchrutschen anfällig, wenn die Spannung nicht ausreichend ist, ferner ist eine solche Anordnung im Hinblick auf die Dauerbelastung nicht stabil.

Ein Kinderwagen der gattungsgemäßen Art ist ferner als Buggy aus der DE 299 23 625 U1 bekannt. Der Buggy umfasst einen Rahmen mit Vorder- und Hinterrädern, eine Zug- und Druckstange. Der Buggy weist ferner auf jeder Seite eine Kopplungsvorrichtung für die drehbare Verbindung der Zug - und Druckstange und der Vorderrad- und der Hinterradstange auf. Die Kopplungsvorrichtung ist ferner für das lösbare Einpassen des Sitzes ausgerüstet. Vorderrad- und Hinterradstangen sowie die Zug-Druckstange sind auf einer Lagerachse auf Schwenklagern gelagert. Eine vorteilhafte Ausbildung der Schwenklager ist in der WO 2006/031115 A2 für einen solchen Buggy angegeben.

Aus der DE 202 20 024 U1 ist ein zusammenklappbarer Schiebewagen für Kinder- und/oder Puppen mit einem Wagengestell bekannt, bei dem die Seitenholme und die Schiebestangen eine fluchtende Einheit bilden. An den Seitenholmen, die die Vorderradanordnung untenseitig tragen, sind die Stützstreben für die Hinterräderachse vorgesehen. Das Gelenk ist so ausgebildet, dass auch die vorschwenkbaren Schiebestangen darin fixierbar sind.

Aus der DE 201 12 118 U1 ist ein zusammenklappbarer Schiebewagen für Kinder und/oder Puppen mit einem Wagengestell bekannt, bei dem an Schrägholmen Stützstreben für die Hinterräder angelenkt sind. Die Stützstreben mit den Hinterrädern können nach vorne in Richtung der Vorderräder verschwenkt werden. Für die Nutzung als Kinderwagengestell ist ein Spreizgestänge zwischen den schrägverlaufenden Seitenholmen und den Stützstreben vorgesehen.

Aus der EP 1 762 459 A2 ist ein Fahrgestell für einen Kinder- oder Puppenwagen mit einem Schiebebügel und einer Vorderachs- sowie einer Hinterachsverstrebung bekannt, bei der der Schiebebügel mit der Vorderachsverstrebung zum Zusammenlegen des Fahrgestells über ein Getriebe derart verschwenkbar gekoppelt ist, dass bei einem Verschwenken des Schiebebügels in Richtung der Hinterachsverstrebung eine gegenläufige Verschwenkung der Vorderachsverstrebung derart erfolgt, dass die Vorderachsverstrebung entgegengesetzt zum Schiebebügel ebenfalls auf die Hinterachsverstrebung zu bewegt wird.

Aus der DE 297 16 985 U1 ist ein Kinderwagen bzw. ein Kindersportwagen mit einem klappbaren Wagengestell bekannt, das einen Schiebebügel aufweist, der am Wagengestell um eine Schwenkachse verschwenkbar vorgesehen ist. Der Schiebebügel ist zur wunschgemäßen Höheneinstellung seines Schiebegriffes um die Schwenkachse verschwenkbar und in der gewünschten Höhenposition in Bezug auf das Wagengestell arretierbar. Des Weiteren können die Schiebebügelstangen aus einer ersten Schieberichtung um ca. 80° in eine zweite Schieberichtung verschwenkt werden, so dass das Kind im Kinderwageneinsatz in einem Fall zur schiebenden Person gerichtet blickt und im anderen Fall in Wagenlaufrichtung nach vorne.

Aus der WO 2005/108181 ist ein Kinderwagen bekannt, der an den schrägen von vorne nach hinten verlaufenden Holmen Schwenklager für Stützholme für die hinteren Räder aufweist. Der Schiebebügel ist an den hinteren Stützstreben, an deren Enden die hinteren Räder gelagert sind, verschwenkbar gelagert. Bei diesem Schwenkvorgang werden zugleich auch die vorderen schräg verlaufenden Holme, an deren Enden eine Gabel für ein Vorderrad vorgesehen ist, in Richtung der hinteren Stützstreben verschwenkt. Zu diesem Zweck sind die vorderen Schrägholme und die zugeordneten Schiebestangen an zwei gegenläufigen Scheiben mit segmentförmigen Ausnehmungen befestigt, die auf einer gemeinsamen Achse relativ zueinander drehbar gelagert sind und einerseits einen Teilzahnkranz außenseitig und andererseits einen solchen innenseitig aufweisen, die über ein Ritzel miteinander in Wirkverbindung stehen. Sobald die eine Verriegelung gelöst ist, die die beiden Scheiben in der Aufstellposition des Wagengestells in einer bestimmten Position festhält, kann die Schwenkbewegung ausgeführt werden, wobei die gegenseitige Verschwenkung der unteren Holme und der Schiebestangen, wie vorher angegeben, durch die Mitkopplung über das eingesetzte Ritzel erfolgt.

Der Erfindung liegt die Aufgabe zugrunde, einen zusammenklappbaren Schiebewagen für Kinder und/oder Puppen mit einer Mechanik anzugeben, die eine hohe Stabilität gewährleistet, eine einfachere Gestaltung der Schwenklager und eine einfachere Bedienung beim Verbringen eines aufgestellten Wagengestells in eine zusammengeklappte Verstauposition, wobei ein Verschwenken der Schiebestangen auf die vorderen Stützstreben und ein weiteres Verschwenken der Schiebestangen in der aufgestellten Position des Wagengestells ermöglicht wird, um den Kinder - und/oder Puppenwagen in beide Richtungen derart schieben zu können, dass das Kind entweder nach vorne oder zur schiebenden Person schauen kann.

Die Erfindung löst die Aufgabe durch Ausgestaltung des zusammenklappbaren Schiebewagens für Kinder und/oder Puppen gemäß der im Anspruch 1 angegebenen technischen Lehre.

Vorteilhafte Weiterbildungen der Erfindung sind in den Unteransprüchen im Detail angegeben.

Ein zusammenklappbarer Schiebewagen für Kinder und/oder Puppen nach der Erfindung weist mindestens auf:
- zwei zur Längsachse des Schiebewagens spiegelbildlich angeordnete von vorne nach hinten ansteigend verlaufende vordere Stützstreben, an deren unteren Enden Halter und/oder ein verbindendes Brückenelement mit Haltern und mit Lagerungen von Vorderrädern oder zur Lagerung einer mittigen Vorderradanordnung vorgesehen sind,
- zwei zur Längsachse des Schiebewagens spiegelbildlich angeordnete von hinten nach vorne ansteigend verlaufende Stützstreben, deren unteren Enden Halter mit Lagern für Hinterräder oder zur Befestigung einer Anordnung mit einer Achse mit daran außenseitig ansteckbaren Hinterrädern aufweisen,
- arretierbare, beidseitig angeordnete Schwenklager, die ein relatives Verschwenken der vorderen und hinteren Stützstreben gegeneinander und ein Verbringen derselben sowohl in eine aufgestellte Fahrposition als auch in eine zusammengelegte Verstauposition ermöglichen,
- zwei an Schwenklagern angebrachte, schräg nach oben vorstehende Schiebestangen, an deren oberen Enden einzelne Schiebegriffe oder ein verbindender Schiebebügel angebracht sind,
   wobei
- die vorderen Stützstreben an Trägern fixiert sind,
- an jedem der seitlichen Träger ein erstes Schwenklager für eine Schiebestange vorgesehen ist, wobei die Schiebestange mindestens in der Schiebestellung arretierbar ist,
- an jedem der Träger nach unten versetzt ein zweites Schwenklager für die zugeordnete hintere Stützstrebe vorgesehen ist, wobei Mittel zur Sicherung der Stützstrebe mindestens in der aufgestellten Position vorgesehen sind,
- jede hintere Stützstrebe über die Schwenklager nach vorne in eine Verstauposition schwenkbar sind,
- die Schiebestangen nach vorne in Richtung der vorderen Stützstreben schwenkbar sind,
- jede hintere Stützstrebe über die Schwenklager nach vorne in eine Verstauposition schwenkbar ist,
- zwischen dem Schwenklager für die Schiebestange und dem Schwenklager für die hintere Stützstrebe ein Kopplungsgetriebe vorgesehen ist, das derart ausgelegt ist, dass beim Vorschwenken der Schiebestange in Richtung der vorderen Stützstrebe durch Drehbewegungstransformation die hintere Stützstrebe automatisch nach vorne in Richtung des Vorderrades verschwenkt und
- dass das Koppelgetriebe eine auf der Schwenkachse des Schwenklagers für die Schiebestange drehbar gelagerte Scheibe mit partiell am Scheibenumfang vorgesehenen Ritzeln aufweist, die über einen an der Schiebestange befestigten Mitnehmer beim Drehen der Schiebestange mit drehbar ist, und dass die Ritzel in eine konturenangepasste Verzahnung eines mindestens segmentierten Zahnkranzes an der hinteren Stützstrebe eingreifen, wobei die hintere Stützstrebe am Zahnkranz und dieser am Schwenklager befestigt sind.

Soweit im Nachfolgenden singulare Bezeichnungen verwendet werden und damit einseitige Ausführungen des Kinderwagens, erfolgt dies der Einfachheit halber. Tatsächlich weist der Kinderwagen spiegelbildlich um die Längsachse gespiegelt Vorder- und Hinterräder in gleicher Höhe, gleiche Seitenausbildungen, Gelenke, usw., auf. Die Erfindung ist darüber hinaus nicht nur auf vierrädrige Wagengestelle anwendbar, sondern auch auf dreirädrige, wobei das dritte Rad in der Regel das Vorderrad ist. Soweit von vorderen und hinteren Stützstreben gesprochen wird, umfasst dies aber auch Ausführungsformen, die umgekehrt ausgebildet sind, also die hinteren Räder vordere Räder und die vorderen Räder hintere Räder sein können, was sich auch beim Umlegen der Schiebestangen in die eine oder andere Schieberichtung ergibt. Die Schiebestangen können einzelne Schiebestangen sein. In diesem Fall müssen Querverbindungsholme zwischen den Seiten vorgesehen sein, beispielsweise zwischen den vorderen und den hinteren Stützstreben. Wird ein Kinderwageneinsatz zwischen die beiden Seiten eingefügt, was über entsprechende Halter oder Adapter an den vorderen und/oder hinteren Stützstreben und/oder an den beiden Schiebestangen erfolgt, so kann die Stabilität auch über diesen Einsatz hergestellt werden, wenn dieser beispielsweise ein verwindungssteifer Einsatz, z. B. ein aus Kunststoff gefertigter Schaleneinsatz ist. Durch die Anbringung der beiden Schwenklager auf den seitlichen Trägern ist es möglich, die hinteren Räder so weit vorzuschwenken, dass sie außenseitig die vorderen Räder überstehen. Das Stauvolumen wird also auch bei nicht abgenommenen hinteren und/oder vorderen Rädern verkleinert. Darüber hinaus werden die Schiebestangen durch die Aufteilung und Platzierung der Schwenklager zwischen die vorderen und hinteren Räder geschwenkt. Auch dies führt zu einer Verkleinerung des Stauvolumens. Da darüber hinaus in einer Ausgestaltungsform, bei der die beiden Schiebeholme über einen Schiebebügel miteinander verbunden sind, der über seitliche Rastkupplungen bekannter Art verschwenkbar ist, es ermöglicht wird, auch diesen Teil wieder zurückzuschwenken bzw. auf die Schiebestangen zu schwenken, wird der gesamte Stauraumbedarf dieses zusammenklappbaren Kinderwagengestells sehr klein. Dies hat auf den Einsatz im aufgestellten Zustand keine Auswirkung.

Der Einsatz kann von bekannter Art sein. Es kann sich dabei um einen Liegeeinsatz oder auch einen Sitzeinsatz handeln. Sofern der Einsatz nicht aus Stoff besteht, sondern ein Komplettgebilde ist, ist der Einsatz aus dem Fahrgestell vor dem Zusammenklappen herauszunehmen. Er kann dann beispielsweise auch als Babytragetasche oder als Babywanne in einem Kraftfahrzeug, auf dem Rücksitz angeschnallt, mitgeführt werden. In einem solchen Wagengestell kann auch über entsprechende Adapter ein Autokindersitz an die Schiebeholme montiert sein. Die Adapter können an Befestigungspunkten an den vorderen und/oder hinteren Stützstreben oder auch an den Schiebestangen zusätzlich oder allein vorgesehen sein. Die Schiebestangen müssen in den jeweiligen Schiebestellungen, in denen sie zur Fortbewegung des Kinderwagens durch Zug oder Druck bedient werden, arretiert werden. Es empfiehlt sich darüber hinaus auch, die Schiebestangen in der Verstaustellung zu arretieren, damit ein unbeabsichtigtes Aufklappen nicht möglich ist.

Die Erfindung ermöglicht darüber hinaus auf relativ einfache Weise, dass zwischen dem Schwenklager für die Schwenkstange und dem Schwenklager für die hintere Stützstrebe ein Kopplungsgetriebe eingebaut werden kann, das derart ausgelegt ist, dass beim Vorschwenken einer Schiebestange in Richtung der vorderen Stützstrebe zumindest im Schwenkbereich unterhalb der untersten Gebrauchsstellung über der vorderen Stützstrebe durch Bewegungstransformation die hintere Stützstrebe automatisch nach vorne in Richtung des Vorderrades verschwenkt. Ein solches Kopplungsgetriebe kann verschiedenartig ausgeführt sein. Eine einfache Ausführung sieht vor, dass auf der Schwenkachse des Schwenklagers für die Schiebestangen eine drehbar gelagerte Scheibe mit mindestens partiell am Scheibenumfang vorgesehenen Ritzeln vorgesehen ist. Die Scheibe ist über einen an der Schiebestange befestigten verschiebbaren Mitnehmer mit der Schiebestange gekoppelt. Die Ritzel greifen bei der Drehung der Scheibe in eine konturenangepasste Verzahnung eines z. B. segmentierten Zahnkranzes ein, der fest an der hinteren Stützstrebe befestigt ist, wodurch die hintere Stützstrebe, die verschwenkbar am Träger gelagert ist, nach vorne automatisch verschwenkt. Zusätzlich kann auch ein Anschlag und/oder eine Sperre vorgesehen sein, die das Ausschwenken der hinteren Stützstreben sowohl nach hinten als auch nach vorne im aufgestellten Zustand beschränkt oder verhindert. Zum Beispiel kann eine Übertotpunktfeder die hintere Stützstrebe in der aufgestellten Position sichern.

Durch die segmentförmige Anordnung der Ritzel ist es möglich, einen ersten Schwenkbereich der Schiebestange vorzusehen, bei dem das Kopplungsgetriebe noch nicht eine Bewegungstransformation bewirkt und die Ritzel mit der Verzahnung erst dann in Eingriff kommen, wenn die Bewegungstransformation gewünscht ist, um die hinteren Stützstreben nach vorne zu schwenken.

Auch für die Arretierung der Schiebestange in den verschiedenen Schwenkpositionen gibt es unterschiedliche Ausgestaltungsmöglichkeiten. Um eine Fernbedienung über einen Seilzug, Bowdenzug oder eine Zugstange durchführen zu können, die beispielsweise außen- oder innenseitig an der Schiebestange entlanggeführt ist und mittels Betätigungselement an einem Schiebehandgriff oder an einem Schiebebügel auslösbar ist, ist als Mitnehmer ein Verriegelungselement vorgesehen, das als Blockierstein verschiebbar an der anliegenden Seite der Schiebestange vorstehend gelagert ist und sowohl in eine U-förmige Ausnehmung oder Anformung an der Scheibe des Koppelgetriebes als auch mindestens in der untersten Schiebestellung zwischen zwei Stützrippen an dem Träger verdrehsicher gehalten ist. Anstelle von zwei Stützrippen kann auch eine Stützrippe vorgesehen sein. In diesem Fall muss das Verriegelungselement eine Lagernut aufweisen, die auf diese Rippe aufschiebbar ist. Auf dieses Verriegelungselement wirkt eine Bestätigungsstange oder ein Seilzug. Es ist aber auch möglich, das Verriegelungselement über einen außenseitig vorstehenden Betätigungsarm, der in einer Langlochführung geführt ist, aus der Verriegelungsstellung herauszuziehen. Die Anschläge können aber auch durch eine in dem Träger oder in einer Trägerschale konzentrisch zur Lagerachse, in einem bestimmten Radius verlaufende Leitkurve realisiert werden, die innenliegende Rastausnehmungen aufweist. Die Rastausnehmungen sollten dabei über die Kurvenlänge so verteilt sein, dass sie ein Verrasten in die verschiedenen Gebrauchsstellungen einschließlich der Verstaustellung ermöglicht. In diese Ausnehmungen greift dann ein Rastansatz oder ein Schraubbolzen oder ein anderer Bolzen, der an dem Arretierungselement angebracht ist, ein. Anstelle der festen Einbringung kann auch vorgesehen sein, dass ein Flächenelement eingesetzt und an dem Träger befestigt wird, das eine solche Leitkurve und auch die Rastausnehmungen aufweist. Die Rastausnehmungen sollten dabei eine Tiefe aufweisen, die dem notwendigen Verschiebeweg des Verriegelungselementes zwischen der Unterseite und dem Bolzen zur Entriegelung entspricht, damit der Bolzen durch Verschieben des Verriegelungselementes in die Leitkurve verbringbar ist und ein Verschwenken der Schiebestange mit der damit über das Verriegelungselement gekoppelten Scheibe freigibt.

Als besonders vorteilhaft hat es sich erwiesen, den Träger in Form einer Lagerschale mit Lagerausnehmungen und/oder Lagerbolzen zur Lagerung der Scheibe mit den Ritzeln und zur Befestigung des Flächenelementes mit der Leitkurve sowie zur Befestigung eines aufsetzbaren konturenangepassten, relativ verdrehbaren, deckelförmigen Aufsatzes des Schwenklagers vorzusehen, an dem außenseitig oder an oder in einem Ansatz die Schiebestange fixiert ist. Dieser Verbund kann durch zentrisches Verschrauben oder Vernieten zusammengehalten werden, wobei eine zentrale Verschraubung durch die sich drehenden Lagerteile erfolgt. Das ganze Gebilde ist dann ein geschlossenes Gehäuse. Der Aufsatz kann sich dabei auch über das zweite Schwenklager erstrecken, so dass eine Einheit gegeben ist.

An dem Träger befindet sich eine Aufnahme und/oder ein sich radial erstreckender Ansatz, an dem die vordere Stützstrebe befestigt werden kann. Der Ansatz kann hohl ausgeführt sein, so dass die Stützstrebe einsteckbar ist. Die Stützstrebe besteht in der Regel aus Aluminium und ist ein Hohlprofil. Die hinteren Stützstreben und die Schiebestangen sowie der Schiebebügel bestehen ebenfalls aus einem Hohlprofil, wie dies üblicherweise zur Anwendung kommt. Der radial sich erstreckende Ansatz, der das zweite Schwenklager trägt, ist am Träger fest vorgegeben. Dieser kann auch an einem Kunststoffformteil mit angeformt sein. Der Aufsatz kann zur Schiebestange hin einen achsparallel verlaufenden länglichen Lagerdurchbruch oder eine Lagerkammer für das Verriegelungselement ebenfalls aufweisen bzw. ist mit dem Verriegelungselement ein solcher Ansatz gekoppelt, der an der gegenüberliegenden Seite an der Schiebestange angebracht ist und in diesen Lagerdurchbruch bzw. in die Lagerkammer eingreift, wodurch der Verschiebeweg definiert werden kann. Die Längen des Lagerdurchbruches oder der Lagerkammer und die der U-förmigen Ausnehmung in der Scheibe sind so groß gewählt, dass in der untersten Schiebeposition das Verriegelungselement in den Zwischenraum zwischen den zwei Stützrippen oder mit einer Nut auf einer Stützrippe an oder in dem Träger eingreift und in der ausgerückten Position nur in der U-förmigen Ausnehmung oder Anformung der Scheibe verbleibt.

Die Träger bzw. die Trägerschale, das Flächenelement, die Scheibe mit den Ritzeln, das Verriegelungselement und/oder die Abdeckung sowie die Gelenke lassen sich aus Kunststoff als Kunststoffformteile besonders preiswert herstellen. Um die Verriegelung zu unterstützen, ist vorgesehen, dass das Verriegelungselement durch eine Feder am Träger oder in dem Trägergehäuse radial abgestützt ist und dass die Federkraft der aufzubringenden Verschiebekraft beim Entriegeln des Verriegelungselementes entgegenwirkt.

Um das Einschwenken der hinteren Stützstreben nach vorne zu unterstützen, kann eine Federanordnung, z. B. eine Totpunktfederanordnung, zwischen dem Träger einerseits und der verschwenkbaren hinteren Stützstrebe andererseits vorgesehen sein. Diese dient primär der Sicherung der Aufstellposition der Stützstrebe. Eine solche Federanordnung kann eine einfache Zugfeder sein, wobei nur die Anlenkungspunkte an dem Träger einerseits und an der Stützstrebe andererseits so zu platzieren sind, dass der Übertotpunkt der Feder bei der Aufstellung überschritten ist, dass andererseits die Federwirkung aber beim Vorstellen der hinteren Stütze voll wirksam ist und die Schwenkbewegung begünstigt. Die Federanordnung kann aber auch in einer Zylinder-Stößelkonstruktion untergebracht sein. Hierzu kann gegenüber dem ersten Schwenklager ein nach hinten versetztes Schwenklager, z. B. in Form eines Zapfens, für einen Stößel an dem Träger vorgesehen sein. Der Stößel taucht in eine Hülse ein, die untenseitig an einem Lager an der hinteren Stützstrebe oder an einem der beiden hinteren, die Stützstreben verbindenden Holme drehbar gelagert ist. Zwischen einem bodenseitigen Gleitstein an dem Stößel und einem obenseitigen Ringflansch an der Hülse ist eine Druckfeder vorgesehen. Die Druckfeder wird beim Verbringen der hinteren Stützstrebe in die Aufstellposition bis zum Totpunkt gespannt und übt dann ihre volle Spannkraft zur Aufstellsicherung der Stützstrebe aus. Beim Verschwenken und Überschreiten des Totpunktes der hinteren Stützstrebe in die Verstauposition wird hingegen die Schwenkbewegung unterstützt. Die Dimensionierung der Federkraft kann dabei so groß sein, dass ein automatisches Vorschwenken ohne große Kraftausübung auf die vorgeschwenkte Schiebestange möglich ist.

Für eine Fernbetätigung des Verriegelungselementes hat es sich als vorteilhaft erwiesen, jeweils in den Schiebestangen eine Betätigungsstange vorzusehen, die um einen definierten Hub durch Langlochführungsbildung in der Stange verschiebbar sind. Die Langlochführung kann dabei im Bereich des Aufsatzes vorgesehen sein. Die Stange selbst ist an dem Verriegelungselement angeschraubt. Obenseitig kann an die Stange ein Handgriff angebracht sein, der aus einem Führungsschlitz in der Schiebestange hervortritt. Es ist aber auch auf einfache Weise möglich, die Stange über einen Seil- oder Drahtzug auch dann zu betätigen, wenn der Schiebebügel über seitliche Gelenke an den Schiebestangen befestigt ist. Das Betätigungselement kann dann oben am Schiebebügel vorgesehen sein. Auch hier können handbetätigte Schiebeelemente angebracht sein; es ist aber auch möglich, einen Drehgriff auf dem Schiebebügel aufzubringen, bei dessen Drehung die Verriegelung aufgelöst bzw. durch Rückdrehung oder automatische Rückstellung in Folge der Wirkung von Federn wieder hergestellt wird.

Die Betätigungsstange ist zweckmäßigerweise verschiebbar in der Schiebestange obenseitig in einen Lagerblock geführt, der in der Schiebestange fixiert ist, und weist unterhalb des Lagerblockes einen Befestigungspunkt, z. B. einen Zapfen, auf, an dem der Draht oder das Zugseil befestigt ist. Zwischen den Zapfen und einer Stützwand an dem Lagerblock ist eine Feder angebracht, die stets dafür Sorge trägt, dass die Betätigungsstange nach unten gedrängt wird, so dass die Verriegelung auch hierüber sichergestellt ist. Das Zugseil wirkt wie die Seele bei einem Bowdenzug. Um nun die Toleranzen der Längen des Drahtes oder Zugseiles und die Toleranzen des Verriegelungselementes und dessen Einpassung auszugleichen, kann am Lagerblock eine Einstellvorrichtung vorgesehen sein, die es ermöglicht, den Draht oder das Zugseil in der aktiven Länge zu justieren. Die Einstellmöglichkeit ist auf einfache Weise realisierbar durch die Durchleitung des Zugseiles über zwei Bogenführungen, die beabstandet zueinander am Lagerblock angebracht sind. Ein quer zum Zugseil verschiebbares Bogenteil kann dem gegenüber durch eine Stellschraube eingestellt werden, so dass durch Durchbiegung die Wirkungslänge des Drahtes oder des Zugseiles verändert wird. Durch die bogenförmige Führung ist dabei die Bedienbarkeit nicht beeinträchtigt. Das Zugseil gleitet an den Bogenführungen entlang.

Die Erfindung wird nachfolgend anhand des in den Zeichnungen dargestellten Ausführungsbeispiels ergänzend erläutert.

In den Zeichnungen zeigen:
- Fig. 1: in perspektivischer Darstellung ein Fahrgestell für einen Kinderwagen in aufgestellter Position mit den erfindungswesentlichen Elementen,
- Fig. 2: das in Fig. 1 dargestellte Kinderwagengestell in der zusammengeklappten Position, in der er verstaut werden kann,
- Fig. 3: in schematischer Darstellung die wesentlichen Teile der Schwenklager und des Kopplungsgetriebes,
- Fig. 4: einen Auszug aus der Darstellung in Fig. 3 in Form von einer Explosionszeichnung mit einem Flächenelement mit Leitkurve und Rastausnehmungen für die Fixierung der Schiebestange in verschiedenen Schwenkpositionen,
- Fig. 5a: ein geöffnetes Schwenklager mit einem Schiebestangenabschnitt in perspektivischer Darstellung,
- Fig. 5b: abgesetzt zu 5a einen Träger in Schalenform mit Ansatz und Lagerungsbohrung für das Schwenklager für die hintere Stützstrebe sowie eine anmontierte vordere Stützstrebe,
- Fig. 5c: ein Verbindungsteil zum Aufstecken auf den Ansatz in Fig. 5b, an welchem Verbindungsteil eine Federanordnung mit einer Totpunktfeder angebracht ist,
- Fig. 6: eine vereinfachte Darstellung, aus der die Wirkung der Totpunktfeder auf die hintere Stützstrebe ersichtlich ist,
- Fig 7: eine im oberen Abschnitt einer Schiebestange befestigte Rastkupplung und einen Schiebebügelabschnitt mit einer in einer Explosionszeichnung dargestellten Betätigungsvorrichtung zum Betätigen des Verriegelungselementes und
- Fig. 8: eine vergrößerte Darstellung der Lagerung einer Betätigungsstange in einem Lagerblock innerhalb des ovalen Profils der Schiebestange.

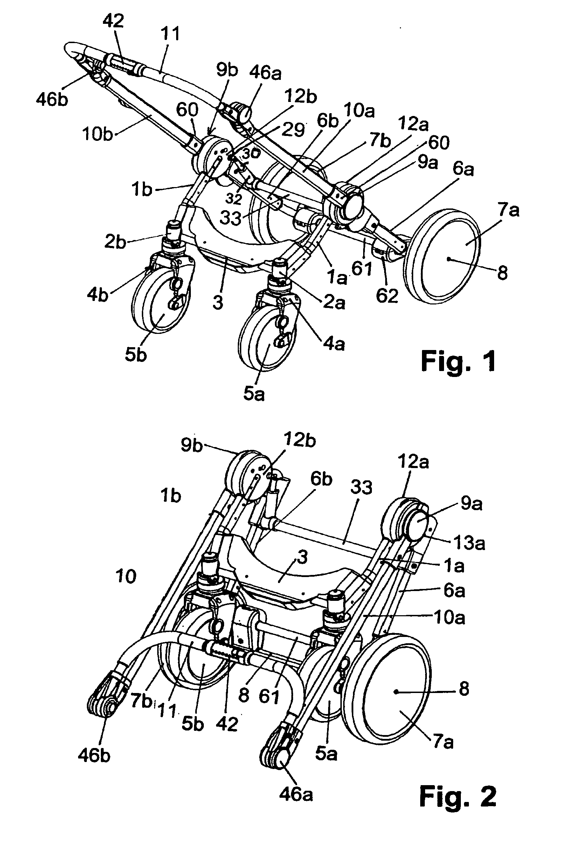

In Figur 1 ist in einer perspektivischen Darstellung ein Kinderwagengestell nach der Erfindung, und zwar im aufgestellten Zustand, dargestellt. Nicht dargestellt sind Adapter zur Aufnahme eines Einsatzes zwischen den beiden Seitenteilen dieses Gestells. Das Wagengestell nach Figur 1 besteht aus zwei beabstandet zueinander und spiegelbildlich angeordneter vorderer Stützstreben 1a und 1b, die fest an einem schalenförmigen Träger 12a, 12b befestigt sind. Die beiden vorderen Stützstreben 1a und 1b sind untenseitig über ein Brückenelement 3 miteinander verbunden. An dem Brückenelement 3 sind Halter 2a, 2b für Vorderräderanordnungen mit Lagerungen 4a, 4b, die verschwenkbare Gabelhalter sind und die Räder 5a, 5b aufnehmen, eingezeichnet. Anstelle der hier eingezeichneten, parallel angeordneten, um senkrechte Achsen verstellbaren Räder 5a, 5b können auch andere Räder bzw. Radanordnungen mit Doppelrädern oder eine Gabel mit einem einzigen Rad oder einer Doppelradanordnung in der Mitte angebracht sein. Für die Erfindung ist die Ausgestaltungsform völlig frei. An den Trägern 12a, 12b sind Schwenklager 9a, 9b in Form aufgesetzter, relativ gegeneinander verdrehbarer Schalenkörper angebracht, an denen Ansätze 60 vorgesehen sind, in die die aus ovalem Metallrohr bestehenden Schiebestangen 10a, 10b befestigbar sind, was durch die eingezeichnete Bohrung verdeutlicht ist. Der Träger 12a, 12b weist ferner einen Ansatz auf, an welchem schwenkbeweglich die hinteren Stützstreben 6a, 6b angelenkt sind. Die Details werden später anhand anderer Figuren noch erläutert.

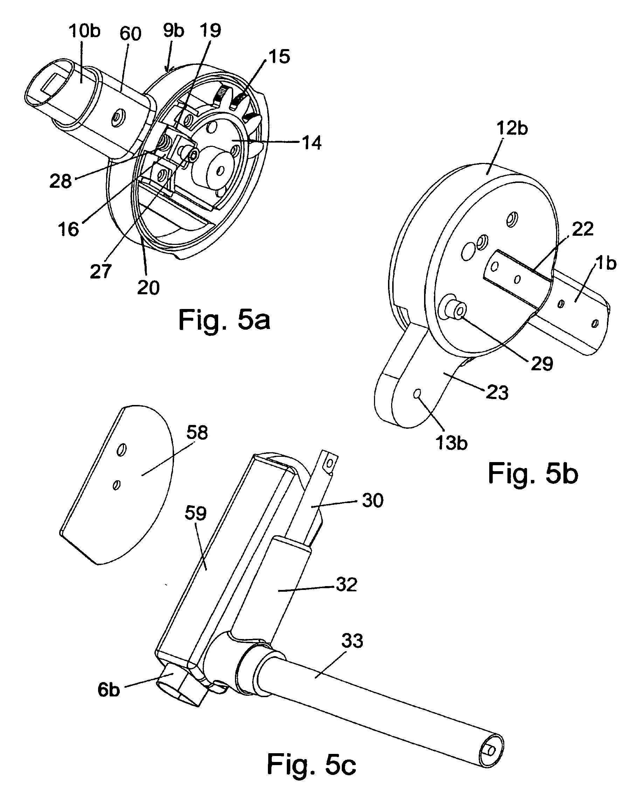

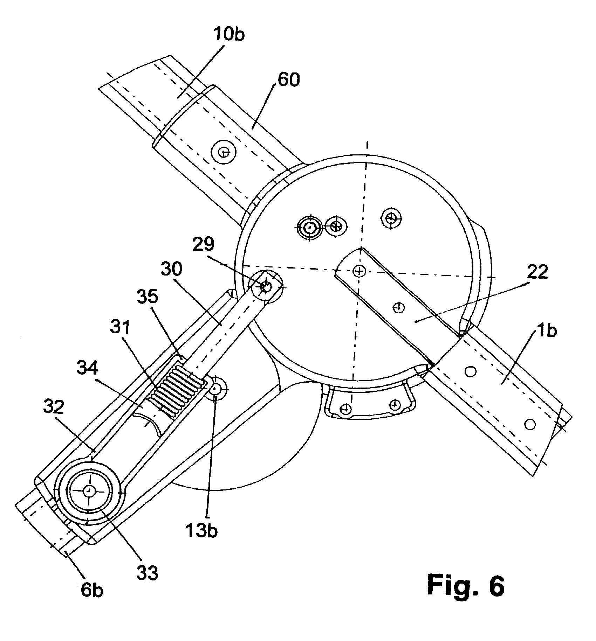

Die Darstellung zeigt ferner, dass an den Enden der hinteren Stützstreben 6a, 6b ein Verbindungsrohr 61 vorgesehen ist, an welchem Schwingen 62 befestigt sind, die wiederum eine Achse 8 tragen, auf deren seitlichen Naben die hinteren Räder 7a, 7b aufgesteckt und hieran mit bekannten Mitteln gesichert gehalten sind. Figur 1 zeigt ferner einen Querholm 33, der zwischen den hinteren Stützstreben 6a, 6b vorgesehen ist. Des Weiteren ist ersichtlich, dass auf dem Holm 33 verschwenkbar eine Hülse 32 gelagert ist, die mit einem Stößel 30 zusammenwirkt, der auf einen, ein Schwenklager 29 bildenden Zapfen aufgesetzt ist. Die Bedeutung dieser Anordnung, zu der eine Totpunktfeder gehört, wird später anhand der Figuren 5c und 6 näher beschrieben.

Die Figur 1 zeigt ferner, dass am oberen Ende der beiden parallel verlaufenden Schiebestangen 10a, 10b ein Schiebebügel 11 über Rastkupplungen 46a, 46b angelenkt ist. Durch diese Rastkupplungen bekannter Art lässt sich der Schiebebügel 11 im Neigungswinkel gegenüber den Schiebestangen 10a, 10b verstellen, so dass eine Höhenanpassung an die Größe der Person, die den Kinderwagen schiebt, auf einfache Weise erfolgen kann. Die Rastkupplungen 46a und 46b weisen einen Betätigungsknopf auf, durch den die Rastkupplung außer Eingriff gerät, so dass über innenliegende Verzahnungen verschiedene Winkelverstellungen möglich sind. Auf dem Querholm des Schiebebügels 11 befindet sich ferner ein Betätigungselement 42, das als Drehelement aus zwei Halbschalen zusammengesetzt ist, über das die Verriegelungseinrichtungen zum Verschwenken der Schiebestangen 10a und 10b betätigbar ist.

In Figur 2 ist das in Figur 1 gezeichnete Wagengestell im zusammengeklappten Zustand, also in dem Zustand, in dem es verstaut werden kann, dargestellt. Die Teile sind die gleichen wie in Figur 1. Aus der Darstellung ist jedoch ersichtlich, dass die Abstandsweite der hinteren Stützstreben 6a, 6b größer ist als die Abstandsweite der vorderen Stützstreben 1a und 1b, so dass die hinteren Räder 7a, 7b, die sich auf der Achse 8 befinden, so weit vorgeschwenkt werden können, dass sie seitlich die vorderen Räder 5a und 5b überstehen. Aus der Darstellung ist ferner ersichtlich, dass in dieser zusammengeklappten Position auch die Schiebestangen 10a, 10b nach vorne über den Stützstreben 1a und 1b enden und dass der Schiebebügel 11 hochgeklappt ist. Es handelt sich also um eine kleine Falteinheit, die auf einfache Weise auf kleinstem Raum verstaut werden kann. Dies wird bewerkstelligt durch die Ausbildung der Träger 12a und 12b sowie durch die Schwenklager 9a und 9b, auf die anhand der Detailzeichnungen in den weiteren Figuren näher eingegangen wird.

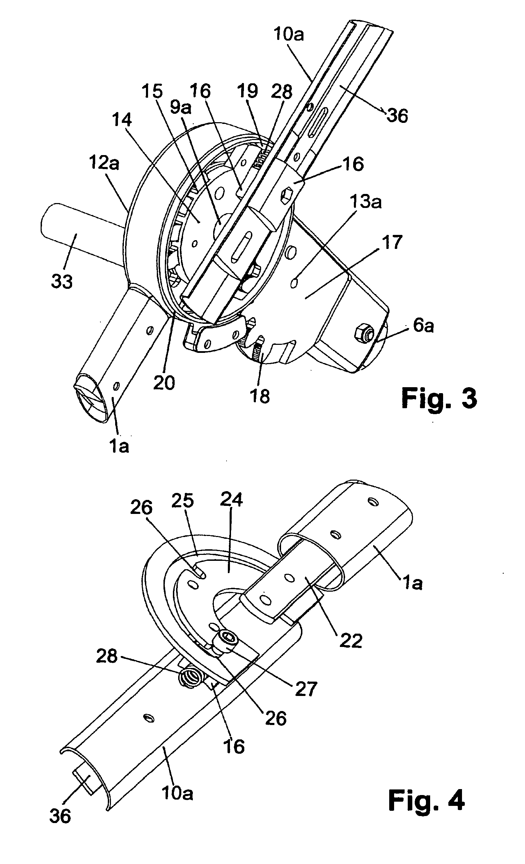

In der vereinfachten perspektivischen Darstellung, die als Explosionszeichnung teilweise ausgeführt ist, ist in Figur 3 ein schalenförmiger Träger 12a dargestellt, der eine kreisrunde zylindrische Gehäuseform aufweist. An der Mantelfläche des Trägers 12a ist ein Ansatz angeformt, auf den die aus einem Hohlprofil bestehende vordere Stützstrebe 1a aufsteck- und anschraubbar ist. Die vordere Stützstrebe 1a ist nur teilweise eingezeichnet. Es ist ferner ersichtlich, dass dieser Träger eine Verlängerung auch in Form einer Kammer aufweist, die sich nach hinten unten erstreckt, auf der in Form eines Lagerbolzens ein Schwenklager 13a für die Aufnahme eines Zahnkranzes 17 mit Verzahnung 18 vorgesehen ist. An diesem Zahnkranz ist die hintere Stützstrebe 6a angeschraubt. Der Zahnkranz 17 ist um das Schwenklager 13a nach vorne verschwenkbar gelagert.

In dem gehäuseförmigen Träger 12a befindet sich, unter einer Scheibe 14 liegend, ein in Figur 4 dargestelltes Flächenelement 24, das eine um die Mittenachse, die zugleich die Mittenachse des Schwenklagers 9a ist, im Radius verlaufende Leitkurve 25 aufweist. Diese Leitkurve 25 weist radial nach innen gerichtete Rastausnehmungen 26 auf, in die der Hals eines Schraubbolzens 27 eingreift, der in einen Mitnehmer bzw. in ein Verriegelungselement 16 eingeschraubt ist. Dieses Verriegelungselement ist blockartig ausgeführt und an einer Betätigungsstange 36 festgeschraubt, die längsverschiebbar in dem Hohlprofil der Schiebestange 10a gelagert ist. Zwischen dem Verriegelungselement 16 und der Mantelwand des schalenförmigen Trägers 12a ist eine Druckfeder 28 angeordnet, die das Verriegelungselement stets in die U-förmige Ausformung drückt, die in eine Scheibe 14 mit Ritzeln 15 eingebracht ist. Die U-förmige Ausformung besteht aus zwei überstehenden Schenkeln, die an der Scheibe 14 vorgesehen sind, und einem sich anschließenden Ausschnitt in der Scheibe 14. Das Verriegelungselement 16 ist hierin also gegen die Kraft der Feder 28 nach außen verschiebbar. In der dargestellten Sicherungsposition greift also der in Figur 4 dargestellte Schraubbolzen 27 in die Rastausnehmung 26 ein. Da das Flächenelement 24 in der Lagerschale des Träger 12a fest montiert ist, ist ersichtlich, dass dann kein Verschwenken der Schiebestange 10a möglich ist. Soll diese Stange in die zweite Schiebeposition verschwenkt werden, so ist es erforderlich, dass über die Betätigungsstange 36 eine Zugkraft auf das Verriegelungselement 16 ausgeübt wird, so dass der Schraubbolzen 27 aus der Rastausnehmung ausfährt und in die Leitkurve 25 eintritt. Nun kann die Schiebestange 10a verschwenkt werden. Unter der Annahme der Stellung der Schiebestangen in Figur 1 bedeutet dies, dass in der dargestellten Position die Schiebestangen in Verlängerung zu den vorderen Stützstreben 1a, 1b gestellt sind. Werden nun die Schiebestangen um z. B. 90° verschwenkt, so wird die in Figur 1 dargestellte Position eingenommen. Dabei gleitet der Schraubbolzen 27 in die mittlere Rastausnehmung 26. Durch weiteres Verschwenken der Schiebestange 10a schwenkt nun der gesamte Schiebebügel 11 nach vorne über die Stützstreben 1a und 1b.

Die Figur 4 zeigt ferner, dass mit dem Vorschwenken der Schiebestange 10a, über die 90° hinausgehend, die Ritzel 15 in Eingriff mit der Verzahnung 18 des Zahnkranzes 17 gelangen, so dass mit weiterem Vorschwenken automatisch auch die hintere Stützstrebe 6a vorgeschwenkt wird und sich dabei um das Schwenklager 13a dreht. Die in Segmentform vorgesehenen Ritzel 15 müssen dabei in Eingriff mit der Verzahnung 18 erst dann gelangen, wenn aus der Position, in der die Schiebestange 10a eine Verlängerung zur hinteren Stützstrebe 6a darstellt, weiter über die vorderen Stützstreben 1a geschwenkt wird.

In den Figuren 5a und 5b ist der Träger 12b dargestellt, der als Schalenträger ausgebildet ist. An diesem ist eine Aufnahme 22 vorgesehen, in die ein Halter eingelegt ist, an dem die vordere Stützstrebe 1b anschraubbar ist und gesichert gehalten wird. Des Weiteren ist deutlich auf der Rückseite des schalenförmigen Gehäuses ein Schwenklager 29 in Form eines vorstehenden Zapfens sichtbar, in den eine Sicherungsschraube einschraubbar ist. Weiterhin zeigt Figur 5b einen Ansatz 23, der angeformt ist und in dem eine Bohrung zur Bildung des Schwenklagers 13b eingebracht ist, an dem schwenkbar die hintere Stützstrebe 6b, die in Figur 5c dargestellt ist, angebracht ist. Hierzu ist ein Verbindungsteil 59 vorgesehen, das verschwenkbar an dem Schwenklager 13 angebracht wird. Zusätzlich ist zur Abdeckung der aus Figur 3 ersichtlichen Verzahnung eine Abdeckung 58 vorgesehen, die in das Verbindungsteil 59 eingesetzt wird. Aus Figur 5a ist ersichtlich, dass aus der Ebene der Scheibe 14 ein Lageransatz vorsteht. Diese greift in eine entsprechende Lagerausnehmung in dem Träger 12b ein. Der Verbund wird durch eine durchgesteckte Schraube, die alle Teile miteinander verbindet, gesichert, so dass bei deckungsangepasster Schale des Trägers 12b an den Aufsatz 20 die Einheit eine optisch geschlossene Gehäuseeinheit bildet. Aus Figur 5a ist ferner ersichtlich, dass der verschiebbar gelagerte Mitnehmer 16 von einer Feder 28 abgestützt ist, um zu erreichen, dass nur bei Zugausübung auf die Betätigungsstange eine Freigabe für die Schwenkbewegung erfolgen kann. Zur Sicherung ist ein Schraubbolzen 27 vorgesehen, der in der Leitkurve 25 (Figur 4) des Flächenelementes 14 geführt ist.

Aus der Darstellung in Figur 5c ist ferner eine Hülse 32 ersichtlich, die auf einem Holm 33 drehbar gelagert ist. Diese Hülse 32 ist Bestandteil einer Totpunkt-Federanordnung. In der Hülse 32 ist ein Stößel 30 verschieblich gelagert. Dieser ist am Zapfen des Schwenklagers 29 drehbar befestigt und daran mittels einer Schraube gesichert. Die Ausführung dieser Federanordnung ist aus Figur 6 ersichtlich. Der Stößel 30 weist am unteren Ende einen Gleitstein 34 auf, der bei expandierter Feder auf die Lagermantelfläche aufgreift und deshalb auch in der Form angepasst ist. Die Federanordnung 31, eine Druckfeder, stützt sich sowohl an dem Gleitstein 34 als auch an dem Ringflansch 35 der ab. In der dargestellten Position ist die hintere Stützstrebe aufgestellt, d. h. der Totpunkt durch die Lagerung auf dem Holm 33 einerseits und auf dem Zapfen des Schwenklagers 29 andererseits ist überschritten, so dass die Feder die aufgestellte Spreizstellung sichert. Es genügt nun, die hintere Stützstrebe 6b vorzuschwenken, um die Feder 31 über den Totpunkt in die Position zu verbringen, in die sie durch Expansion das Vorschwenken der Stützstrebe 6b unterstützt. Die Schwenkbewegung wird im Übrigen durch die ineinandergreifenden Verzahnungen des Kopplungsgetriebes erzwungen. Die Abbildung in Figur 6 zeigt ferner, dass die Schiebestange 10b in einen Befestigungsansatz 60 eingesteckt und daran befestigt ist, während die Stützstrebe 1b mittels eines in eine Aufnahme 22 eingelegten Befestigungsteils fixiert ist. Zusätzlich zu oder anstelle der Federanordnung kann auch ein Verriegelungselement am Träger 12a vorgesehen sein, welches in eine Ausnehmung an der hinteren Stützstrebe oder dem Halter hierfür vorgesehen ist, um die Stützstrebe 6b im aufgestellten Zustand zu sichern.

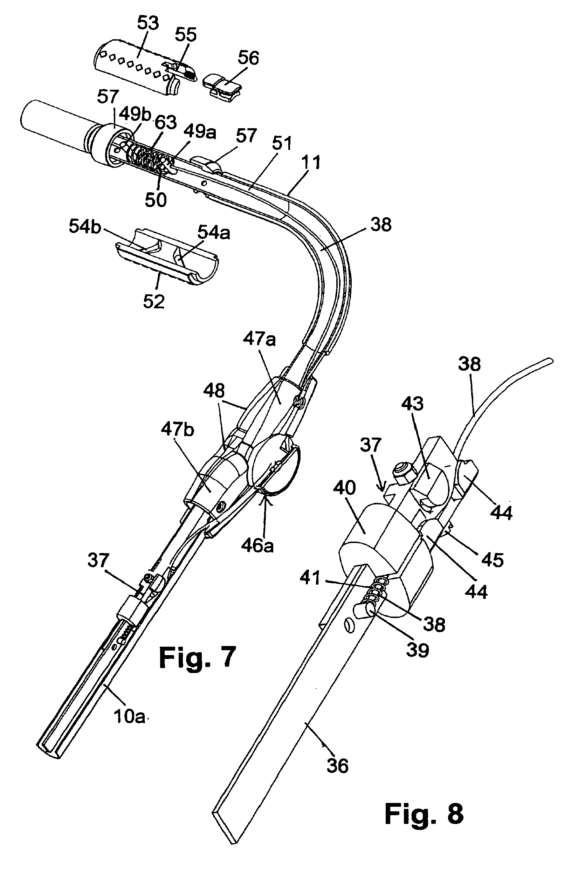

In Figur 7 ist ein Teil einer Schiebestange 10a geschnitten schematisch dargestellt, ferner eine Rastkupplung 46a, die ein Gelenk bildet, das das Ende der Schiebestange 10a mit dem Ende des Schiebebügels 11 verbindet. Der Schiebebügel 11 besteht ebenfalls aus einem Profilrohr, z. B. aus Aluminium, und weist abgebogene seitliche Enden auf. Ein gebogenes Ende ist in einer schematischen Schnittzeichnung dargestellt, um in das Innere des Rohres blicken zu können. In dem Inneren des Rohres liegt ein Zugseil 38 bzw. ein Zug-Schiebedraht, der an einem Querbolzen 49a befestigt ist. Dieser Querbolzen 49a ist in einer Längsführung 50 geführt, ebenso der spiegelbildlich angeordnete Querbolzen 49b für die andere Seite. Die Langlochführung 50 ist in ein Verbindungsteil eingebracht, das die beiden seitlichen Teile des Schiebebügels 11 verbindet. Zwischen den beiden Querbolzen 49a und 49b ist eine Feder 63 eingelegt, die als Druckfeder beide Querbolzen 49a und 49b nach außen drückt. Die beiden Bolzen 49a, 49b stehen an der Unterseite vor und greifen in Leitkurven 54a und 54b, die schräg in eine halbbogenförmige Schale eingebracht sind. Die beiden Leitkurven sind aufeinander zu gerichtet. Es ist ersichtlich, dass durch Drehung die vorstehenden, in die Leitkurven 54a und 54b eingreifenden Zapfenenden der Querbolzen 49a und 49b darin bewegt werden, wenn die Halbschale statisch festgelegt ist, was über die Ringhülsen 57 sichergestellt ist, die das Betätigungselement 11 seitlich einbinden und ein Verschieben verhindern. Die Unterschale 52 bildet zusammen mit der Oberschale 53 das drehbare Betätigungselement 11, wobei die Innenfläche der Oberschale 53 eine Stützfläche für die oberen Stirnflächen der Querbolzen 49a, 49b bildet. Die Oberschale 53 weist ferner eine Aussparung 55 auf. Es ist ferner eine kleine Feder eingezeichnet, gegen die ein Schiebeelement verschiebbar ist, das in die Aussparung 55 mit einem Rastkopf 56 einsetzbar ist. Der Verlängerungsteil greift in eine Arretierungsausnehmung in der Wand der rechten Ringhülse 57. Durch Druck oder Verschieben wird das Schiebeelement aus dieser Arretierungssicherung herausgezogen oder herausgedrückt, so dass dann das Betätigungselement, das aus den beiden Schalen 52 gebildet wird, gedreht werden kann, um die beiden Querbolzen 49a und 49b aufeinander gegen die Kraft der Feder 63 zu zu bewegen. Dabei wird eine Zugkraft auf das Zugseil 38 ausgeübt.

Das Zugseil 38 ist durch das Gelenk, und zwar durch einen Kanal, der durch die Gehäuseteile 47a und 47b gebildet wird, geführt und endet, wie aus Figur 8 ersichtlich, in einem Lagerblock 37, der einen Stützkörper 40 aufweist, der längsgespalten ist und eine längliche Führung für die Betätigungsstange 36 aufweist. Durch den Schlitz wird das Ende des Zugseiles 38 eingelegt und an einem beabstandet zum Stützkörper 40 vorgesehenen Zapfen 39 befestigt. Zwischen dem Zapfen 39 und dem Stützkörper 40 ist eine Feder 41 eingelegt, die als Druckfeder wirkt und gegen deren Kraft das Zugseil 38 angezogen werden muss, um über die Betätigungsstange 36 eine Entriegelung des Verriegelungselementes 16 zu bewirken. An dem Lagerblock 37 sind zur Justierung der aktiven Länge des Zugseiles 38 zwei Bogenführungen 44 vorgesehen, die beabstandet zueinander angeordnet sind und in der Oberseite mit dem Schlitz in dem Stützkörper 40 fluchten. In diese Lücke zwischen den beiden Bogenführungen 44 greift ein quer verschiebbar gelagerter Bogenteil 43 ein, der mittels einer Einstellschraube 45 verschiebbar ist, die durch eine Bohrung an der Unterseite der Schiebestange 10a zugänglich ist, wodurch die aktive Länge justiert werden kann. Durch die Bogenausprägung wird die aktive Länge des Zugseiles 38 gegenüber der tatsächlichen Länge verkürzt, so dass hierüber eine Feineinstellung erfolgen kann. Im Falle der Ausübung einer Zugkraft durch Betätigung des Betätigungselementes an dem Schiebebügel 11 wird gegen die Kraft der Feder 41 der Zapfen 39 nach oben gezogen, wodurch die Betätigungsstange 36 angezogen wird, worüber - wie vorher schon beschrieben - das Verriegelungselement 16 aus der arretierten unteren Stellung vorgezogen wird, so dass die Schiebestange insgesamt verschwenkt werden kann.

### Bezugszeichenliste

- 1a: vordere Stützstrebe
- 1b: vordere Stützstrebe
- 2a: Halter
- 2b: Halter
- 3: Brückenelement
- 4a: Lagerung
- 4b: Lagerung
- 5a: Vorderrad
- 5b: Vorderrad
- 6a: hintere Stützstrebe
- 6b: hintere Stützstrebe
- 7a: Hinterrad
- 7b: Hinterrad
- 8: Achse
- 9a: Schwenklager
- 9b: Schwenklager
- 10a: Schiebestange
- 10b: Schiebestange
- 11: Schiebebügel
- 12a: Träger
- 12b: Träger
- 13a: Schwenklager
- 13b: Schwenklager
- 14: Scheibe
- 15: Ritzel
- 16: Mitnehmer oder Verriegelungselement
- 17: Zahnkranz
- 18: Verzahnung
- 19: U-förmige Anformung
- 20: Aufsatz
- 21: Ansatz
- 22: Aufnahmen
- 23: Ansatz
- 24: Flächenelement
- 25: Leitkurve
- 26: Rastausnehmungen
- 27: Schraubbolzen
- 28: Feder
- 29: Schwenklager
- 30: Stößel
- 31: Federanordnung
- 32: Hülse
- 33: Holm
- 34: Gleitstein
- 35: Ringflansch
- 36: Betätigungsstange
- 37: Lagerblock
- 38: Zugseil
- 39: Zapfen
- 40: Stützkörper
- 41: Feder
- 42: Betätigungselement
- 43: Bogenteil
- 44: Bogenführung
- 45: Einstellschraube
- 46a: Rastkupplung
- 46b: Rastkupplung
- 47a: Gehäuseteile
- 47b: Gehäuseteile
- 48: Schalen
- 49a: Querbolzen
- 49b: Querbolzen
- 50: Längsführung
- 51: Verbindungsteil
- 52: Schale
- 53: Oberschale
- 54a: Leitkurve
- 54b: Leitkurve
- 55: Aussparung
- 56: Schiebeelement
- 57: Ringhülse
- 58: Abdeckung
- 59: Verbindungsteil
- 60: Befestigungsansatz
- 61: Verbindungsrohr
- 62: Schwinge
- 63: Feder

## Patentansprüche

1. Zusammenklappbarer Schiebewagen für Kinder und/oder Puppen mit einem Wagengestell, das mindestens aufweist:
- zwei zur Längsachse des Schiebewagens spiegelbildlich angeordnete, von vorne nach hinten ansteigend verlaufende vordere Stützstreben (1a, 1b), an deren unteren Enden Halter (2a, 2b) und/oder ein verbindendes Brückenelement (3) mit Haltern (2a, 2b) und mit Lagerungen (4a, 4b) von Vorderrädern (5a, 5b) oder zur Lagerung einer mittigen Vorderradanordnung vorgesehen sind,
- zwei zur Längsachse des Schiebewagens spiegelbildlich angeordnete von hinten nach vorne ansteigend verlaufende hintere Stützstreben (6a, 6b), deren unteren Enden Halter mit Lagern für Hinterräder (7a, 7b) oder zur Befestigung einer Anordnung mit einer Achse (8) mit daran außenseitig ansteckbaren Hinterrädern (7a, 7b) aufweisen,
- arretierbare, beidseitig angeordnete Schwenklager, die ein relatives Verschwenken der vorderen (1a, 1b) und hinteren Stützstreben (6a, 6b) gegeneinander und ein Verbringen derselben sowohl in eine aufgestellte Fahrposition als auch in eine zusammengelegte Verstauposition ermöglichen,
- zwei an ersten Schwenklagern (9a, 9b) angebrachte, schräg nach oben vorstehende Schiebestangen (10a, 10b), an deren oberen Enden einzelne Schiebegriffe oder ein verbindender Schiebebügel (11) angebracht sind, wobei
- die vorderen Stützstreben (1a, 1b) an Trägern (12a, 12b) fixiert sind,
- an jedem der seitlichen Träger (12a, 12b) ein erstes Schwenklager (9a, 9b) für eine Schiebestange (10a, 10b) vorgesehen ist, wobei die Schiebestange (10a, 10b) mindestens in der Schiebestellung arretierbar ist,
- an jedem der Träger (12a, 12b) nach unten versetzt ein zweites Schwenklager (13a, 13b) für die zugeordnete hintere Stützstrebe (6a, 6b) vorgesehen ist, wobei Mittel zur Sicherung der Stützstrebe (6a, 6b) mindestens in der aufgestellten Position vorgesehen sind, wobei
- die Schiebestangen (10a, 10b) nach vorne in Richtung der vorderen Stützstreben (1a, 1b) schwenkbar sind,
- jede hintere Stützstrebe (6a, 6b) über die zweiten Schwenklager (13a, 13b) nach vorne in eine Verstauposition schwenkbar ist,
- zwischen dem ersten Schwenklager (9a, .9b) für die Schiebestange (10a, 10b) und dem zweiten Schwenklager (13a, 13b) für die hintere Stützstrebe (6a, 6b) ein Kopplungsgetriebe vorgesehen ist,
- das Kopplungsgetriebe derart ausgelegt ist, dass beim Verschwenken der Schiebestange (10a, 10b) aus der Schiebestellung in Verlängerung zu der vorderen Stützstrebe (1a, 1b) in Richtung der vorderen Stützstrebe (1a, 1b) ein erster Schwenkbereich überfahren wird, in dem keine Bewegungstransformation erfolgt und erst danach eine gewünschte Drehbewegungstransformation die hintere Stützstrebe (6a, 6b) automatisch nach vorne in Richtung des Vorderrades (5a, 5b) verschwenkt, wobei **dadurch gekennzeichnet, dass** das Koppelgetriebe eine auf der Schwenkachse des ersten Schwenklagers (9a, 9b) für die Schiebestange (10a, 10b) drehbar gelagerte Scheibe (14) mit partiell am Scheibenumfang vorgesehenen Ritzeln (15) aufweist, die über einen an der Schiebestange (10a, 10b) befestigten Mitnehmer (16) beim Drehen der Schiebestange (10a, 10b) mit drehbar ist, zweiten die Ritzel (15) in eine konturenangepasste Verzahnung (18) eines mindestens segmentierten Zahnkranzes (17) an der hinteren Stützstrebe (6a, 6b) erst eingreifen, wenn die Schiebestangen (10a, 10b) aus der Schiebestellung in Verlängerung zu der hinteren Stützstrebe (6a, 6b) in Richtung den vorderen Stützstreben (1a, 1b) verschwenken, wobei die hintere Stützstrebe (6a, 6b) am Zahnkranz (17) und dieser am zweiten Schwenklager (13a, 13b) befestigt sind.

2. Schiebewagen nach Anspruch 1, **dadurch gekennzeichnet, dass** der Mitnehmer (16) ein Verriegelungselement ist, das verschiebbar an der anliegenden Seite der Schiebestange (10a, 10b) vorstehend gelagert ist und sowohl in eine U-förmige Ausnehmung oder Anformung (19) an der Scheibe (14) des Koppelgetriebes als auch mindestens in der untersten Schiebestellung zwischen zwei Stützrippen an dem Träger oder auf einer Stützrippe mit einer Nut verdrehsicher gehalten ist, und dass das Verriegelungselement von außen zugänglich oder über eine Betätigungsstange (36) innerhalb der Schiebestange (10a, 10b) oder über einen Bowdenzug und/oder einen Seilzug bedienbar ist.

3. Schiebewagen nach Anspruch 1, **dadurch gekennzeichnet, dass** der Träger (12a, 12b) die Form einer Lagerschale mit Lagerausnehmungen und/oder Lagerbolzen zur Lagerung mindestens der Scheibe (14) mit den Ritzeln (15) und zur Befestigung eines aufsetzbaren, konturangepassten, relativ verdrehbaren, deckelförmigen Aufsatzes (20) des Schwenklagers (9a, 9b) aufweist, an dem außenseitig oder an oder in einem Ansatz (21) die Schiebestange (10a, 10b) fixiert ist, welche Lagerschale (12a, 12b) mit dem Aufsatz (20) durch zentrische Verschraubung oder Vernietung bei gleichzeitiger Sicherstellung der drehbaren Lagerung der Scheibe (14) mit den Ritzeln (15) verbindbar ist, und dass der Träger (12a, 12b) eine Aufnahme (22) und/oder einen sich radial erstreckenden Ansatz zur Befestigung der vorderen Stützstrebe (1b) und einen radial sich erstreckenden Ansatz (23) mit dem Schwenklager (13a, 13b) für die hinteren Stützstreben (6a, 6b) aufweist.

4. Schiebewagen nach Anspruch 2 oder 3, **dadurch gekennzeichnet, dass** der Aufsatz zur Schiebestange einen achsparallel verlaufenden, länglichen Lagerdurchbruch oder eine Lagerkammer für das Verriegelungselement (16) aufweist und das Verriegelungselement (16) hieran geführt ist und in der U-förmigen Ausnehmung oder U-förmige Anformung (19) an der Scheibe (14) eingreift, wobei die Längen des Lagerdurchbruches oder der Lagerkammer und die der U-förmigen Ausnehmung so groß sind, dass in der untersten Schiebeposition das Verriegelungselement (16) in den Zwischenraum zwischen den zwei Stützrippen oder mit einer Nut auf eine Stützrippe an oder in dem Träger (12a, 12b) eingreift und in der ausgerückten Position nur in der U-förmigen Ausnehmung oder Anformung (19) der Scheibe (14) verbleibt.

5. Schiebewagen nach Anspruch 2 oder 4, **dadurch gekennzeichnet, dass** in dem Träger (12a, 12b) oder in der Trägerlagerschale eine konzentrisch zur Lagerachse in einem bestimmten Radius verlaufende Leitkurve mit innen liegenden Rastausnehmungen mindestens an den beiden um ca. 180° versetzten Enden vorgesehen ist oder ein Flächenelement (20) mit einer solchen Leitkurve (25) und Rastausnehmungen (26) an dem Träger (12a, 12b) oder in der Trägerschale fest montiert ist, dass in die Leitkurve (25) ein an dem Verriegelungselement (16) vorstehender Bolzen oder eingeschraubter Schraubbolzen (27) eingreift, wobei die Rastausnehmungen (26) eine Tiefe aufweisen, die dem notwendigen Verschiebeweg des Verriegelungselementes (16) zwischen der Unterseite und dem Bolzen zur Entriegelung entspricht, damit der Bolzen (27) durch Verschieben des Verriegelungselementes (16) in die Leitkurve (25) verbringbar ist und ein Verschwenken der Schiebestange (10a, 10b) mit der damit über das Verriegelungselement (16) gekoppelten Scheibe (14) freigibt, dass das Verriegelungselement (16) durch eine Feder (28) am Träger (12a, 12b) oder in dem Trägergehäuse radial abgestützt ist und dass die Federkraft der aufzubringenden Verschiebungskraft zum Entriegeln des Verriegelungselementes entgegenwirkt.

6. Schiebewagen nach einem der vorhergehenden Ansprüche, **dadurch gekennzeichnet, dass** der Träger (12a, 12b) bzw. die Trägerschale, das Flächenelement (24), die Scheibe (14) mit den Ritzeln (15), das Verriegelungselement (16) und/oder die Abdeckung (20) aus Kunststoff bestehen, wobei die Scheibe (14) ein Kunststoffformteil ist und die Ritzel (15) nur über einen Teilbereich vorgesehen sind und die Scheibe im Übrigen einseitig gegenüber den Ritzeln (15) liegend abgeflacht oder rund ausgeführt ist.

7. Schiebewagen nach Anspruch 1 oder 2, **dadurch gekennzeichnet, dass** gegenüber dem ersten Schwenklager (9a, 9b) nach hinten versetzt ein Schwenklager (29) für einen Stößel (30) einer Federanordnung (31) vorgesehen ist, der in eine Hülse (32) eintaucht, die untenseitig an einem Lager an der hinteren Stützstrebe (6a, 6b) oder an einem, die beiden hinteren Stützstreben verbindenden Holm (33) drehbar gelagert ist, dass zwischen einem bodenseitigen Gleitstein (34) und einem oberen Ringflansch (35) eine Druckfeder (31) vorgesehen ist, dass die Druckfeder (31) beim Verbringen der hinteren Stützstrebe (6a, 6b) in die Aufstellposition sich spannt und über einen Totpunkt gefahren die Aufstellung der Stützstrebe (6a, 6b) sichert und die Schwenkbewegung der hinteren Stützstrebe (6a, 6b) beim Vorschwenken und Verbringen in die Verstauposition nach Lösen einer Verriegelung oder des Verriegelungselementes (16) unterstützt.

8. Schiebewagen nach Anspruch 3, **dadurch gekennzeichnet, dass** der Schalenträger oder der Träger (12a, 12b) eine Lagerungsvertiefung aufweist, in die ein Lageransatz an der Scheibe (14) verdrehbar eingreift, und dass in der Scheibe (14) eine Vertiefung zur Lagerung eines an der Innenseite der Abdeckung vorstehenden Lagerzapfens vorgesehen ist oder ein in eine Bohrung eingesetzter Verschließzapfen eingreift, welche ineinandergreifenden Teile zentrische Bohrungen für eine Schraub-oder Nietverbindung aufweisen.

9. Schiebewagen nach Anspruch 1, **dadurch gekennzeichnet, dass** die seitlichen hinteren Stützstreben (6a, 6b) in einem größeren Abstand zueinander angeordnet sind als die vorderen Stützstreben (1a, 1b), derart, dass die hinteren Räder (7a, 7b) in der Verstauposition seitlich zu den Vorderrädern (5a, 5b) verlaufen.

10. Schiebewagen nach Anspruch 2, **dadurch gekennzeichnet, dass** die Betätigungsstange (36) obenseitig in der Schiebestange (10a, 10b) an einem festmontierten Lagerblock (37) verschieblich geführt ist und von einem Zugseil (38) bedienbar ist, das an der Betätigungsstange (36) von einem Stützkörper (40) befestigt ist, wobei die Betätigungsstange (36) gegen die Kraft einer Feder (41) vom Zugseil (38) beim Betätigen eines Betätigungselementes (42) am Schieber oder am Schiebebügel (11) betätigbar ist,dass an dem Lagerblock (37) ein quer zur Längsachse bewegbarer, in der Tiefe verstellbarer Bogenteil (43) vorgesehen ist, der mit seitlichen Bogenführungen zusammenwirkt, dass das Zugseil (38) dazwischen verläuft und die Wirklänge durch Verstellen des Bogenteiles (43) mittels einer durch eine Bohrung in der Schiebestange (10a, 10b) zugänglichen Einstellschraube (45) justierbar ist.

11. Schiebewagen nach Anspruch 1, **dadurch gekennzeichnet, dass** die beiden Schiebestangen (10a, 10b) über einen Schiebebügel (11) miteinander verbunden sind und dass der Schiebebügel (11) gegenüber der Schiebestange (10a, 10b) über seitliche Rastkupplungen (46a, 46b) in verschiedene Schrägstellungen zur Anpassung der Schiebehöhe an die Größe der schiebenden Person verbringbar ist, welche Rastkupplungen (46a, 46b) zwei Gehäuseteile (47a, 47b) aufweisen, die relativ zueinander verdrehbar ineinander gefügt sind und Ansätze zur Aufnahme oder zur Befestigung jeweils einer Schiebestange (10a, 10b) und eines Endes des Schiebebügels (11) und einen Durchgang für das Zugseil (38) aufweisen, und dass die Gehäuseteile (47a, 47b) an einer Seite, vorzugsweise an der Innenseite, über zwei Schalenteile miteinander gekoppelt sind, die derart ineinander greifen, dass sie gegenüber der Schiebestange und/oder dem Ende des Schiebebügels einen Durchführkanal für Bowdenzüge, Seil - oder Kettenzüge bilden, die für weitere Funktionsstangen, insbesondere Bremsen, und Betätigungselemente vorgesehen sind.

12. Schiebewagen nach Anspruch 10, **dadurch gekennzeichnet, dass** das Querrohr des Schiebebügels (11) rund ist und quer geteilt oder einseitig geöffnet ist und in diesem Bereich das Betätigungselement 11 eingefügt ist, dass Querbolzen (49a, 49b) vorgesehen sind, die in einer Längsführung (50) in einem Verbindungsteil oder der Querrohrwand geführt sind, dass an den Querbolzen (49a, 49b) die Enden des Seilzuges (38) befestigt sind, dass die aus der Längsführung (50) vorstehenden Abschnitte des Querbolzens (49a, 49b) gegenläufig in, in einer halbrohrförmigen Schale (52) eines aus zwei Schalenteilen (52, 53) zusammengesetzten aufsetzbaren Drehgriffes (11) eingearbeitete Leitkurven (54a, 54b) eingreifen, und dass die Oberschale (53) innenseitig die Stützflächen für die anderen Enden der Querbolzen (49a, 49b) bilden oder diese in spiegelbildlich eingebrachten Leitkurven geführt sind, wobei die Leitkurven (54a, 54b) in der Unterschale (52) spiegelbildlich so angeordnet sind, dass durch Ausübung einer Drehung des aus den Schalen (52, 53) zusammengesetzten Betätigungselementes (42) die Bolzen in der Längsführung (50) verschiebbar sind, und dass die Oberschale (53) mit einer Aussparung (55) versehen ist, in die ein Schiebeelement (56) einsetzbar ist, das als Drehsicherung gegen die Kraft einer Feder aus einer seitlichen Ausnehmung in einer Ringhülse (57) bei gleichzeitigem Niederdrücken ausrückbar ist, wodurch die Drehung des Betätigungselementes freigegeben oder gesperrt wird.

13. Schiebewagen nach Anspruch 1, **dadurch gekennzeichnet, dass** die beiden seitlichen Schiebestangen (10a, 10b) in eine Gebrauchsstellung verschwenkbar sind, in der sie eine optische Verlängerung zu den hinteren Stützstreben (6a, 6b) bilden, und dass sie in einer zweiten Gebrauchsstellung eine optische Verlängerung zu den vorderen Stützstreben (1a, 1b) bilden.

14. Schiebewagen nach Anspruch 13, **dadurch gekennzeichnet, dass** das Kopplungsgetriebe erst wirksam ist, wenn die Schiebestangen (10a, 10b) aus der Schwenkposition, in der sie eine optische Verlängerung zu den hinteren Stützstreben (6a, 6b) bilden, nach vorne über die vorderen Stützstreben (1a, 1b) geschwenkt werden.

15. Schiebewagen nach Anspruch 12, **dadurch gekennzeichnet, dass** zwischen den Querbolzen (49a, 49b) eine Druckfeder (63) angeordnet ist, die die Querbolzen (49a, 49b) nach außen drückt, wobei auf das Zugseil (38), das vorzugsweise ein Draht oder ein Drahtseil ist, eine Schubkraft ausübbar ist.

## Claims

1. Collapsible push carriage for children and/or dolls with a carriage frame, at least comprising:
- two front support struts (1 a, 1 b), which are arranged in mirror image with respect to the longitudinal axis of the push carriage and extend so as to rise from front to back and at the lower ends of which holders (2a, 2b) and/or a connecting bridge element (3) with holders (2a, 2b) and with mountings (4a, 4b) of front wheels (5a, 5b) or for mounting a central front wheel arrangement are provided,
- two rear support struts (6a, 6b), which are arranged in mirror image with respect to the longitudinal axis of the push carriage and extend so as to rise from back to front and the lower ends of which have holders with bearings for rear wheels (7a, 7b) or for fastening an arrangement with an axle (8) with rear wheels (7a, 7b) able to be plugged thereonto at the outer side,
- lockable pivot bearings, which are arranged at both sides and which enable a relative pivotation of the front support struts (1 a, 1b) and rear support struts (6a, 6b) relative to one another and bringing the same not only into an erected travel position, but also into a collapsed stowage position,
- two push rods (10a, 10b), which are mounted at first pivot bearings (9a, 9b) and extend at an inclination upwardly and at the upper ends of which individual push handles or a connecting push yoke (11) is or are mounted, wherein
- the front support struts (1 a, 1 b) are fixed to bearers (12a, 12b),
- at each of the lateral bearers (12a, 12b) a first pivot bearing (9a, 9b) for a push rod (10a, 10b) is provided, wherein the push rod (10a, 10b) is lockable at least in the push setting,
- a second pivot bearing (13a, 13b), which is offset downwardly, for the associated rear support strut (6a, 6b) is provided at each of the bearers (12a, 12b), wherein means for securing the support struts (6a, 6b) at least in the erected position are provided, wherein
- the push rods (10a, 10b) are pivotable forwardly in the direction of the front support struts (1 a, 1 b),
- each rear support strut (6a, 6b) is pivotable by way of the second pivot bearing (13a, 13b) forwardly into a stowage position,
- a coupling transmission is provided between the first pivot bearing (9a, 9b) for the push rod (10a, 10b) and the second pivot bearing (13a, 13b) for the rear support strut (6a, 6b) and
- the coupling transmission is so designed that when the push rod (10a, 10b) is pivoted from the push setting in prolongation of the front support strut (1a, 1b) in the direction of the front support strut (1a, 1b) a first pivot range is transited in which no movement transformation takes place and only thereafter a desired rotational movement transformation automatically pivots the rear support strut (6a, 6b) forwardly in the direction of the front wheel (5a, 5b), wherein the coupling transmission comprises a disc (14), which is rotatably mounted on the pivot axis of the first pivot bearing (9a, 9b) for the push rod (10a, 10b), with pinions (15), which are provided partially at the disc circumference and which when the push rod (10a, 10b) is rotated are rotatable therewith by way of an entrainer (16) fastened to the push rod (10a, 10b),
**characterised in that** the pinions (15) engage in a matched-profile toothing (18) of an at least segmental gear rim (17) at the rear support strut (6a, 6b) only when the push rods (10a, 10b) pivot from the push setting in prolongation of the rear support struts (6a, 6b) in the direction of the front support struts (1a, 1 b), wherein the rear support struts (6a, 6b) are fastened to the gear rim (17) and this to the second pivot bearing (13a, 13b).

2. Push carriage according to claim 1, **characterised in that** the entrainer (16) is a locking element, which is displaceably mounted on the adjoining side of the push rod (10a, 10b) to protrude and is held secure against rotation not only in a U-shaped recess or shaped portion (19) at the disc (14) of the coupling transmission, but also at least in the lowermost push setting between two support ribs at the bearer or on a support rib with a groove, and that the locking element is accessible from outside or is operable by way of an actuating rod (36) within the push rod (10a, 10b) or by way of a Bowden pull and/or a cable pull.

3. Push carriage according to claim 1, **characterised in that** the bearer (12a, 12b) has the form of a bearing socket with bearing recesses and/or bearing pins for mounting at least the disc (14) with the pinions (15) and for fastening a matched-profile, relatively rotatable cover-shaped cap (20), which can be placed on, of the pivot bearing (9a, 9b), the push rod (10a, 10b) being fixed to the cap at the outer side or to or in an attachment (21), which bearing socket (12a, 12b) is connectible with the cap (20) by central screw connection or riveting with simultaneous securing of the rotatable mounting of the disc (14) with the pinions (15), and that the bearer (12a, 12b) has a seat (22) and/or a radially extending projection for fastening of the front support strut (1b) and a radially extending projection (23) with the pivot bearing (13a, 13b) for the rear support struts (6a, 6b).

4. Push carriage according to claim 2 or 3, **characterised in that** the cap for the push rod has an axially parallelly extending elongate bearing passage or a bearing chamber for the locking element (16) and the locking element (16) is guided thereat and engages in the U-shaped recess or U-shaped shaped portion (19) at the disc (14), wherein the lengths of the bearing passage or the bearing chamber and that of the U-shaped recess are of such a size that in the lowermost push position the locking element (16) engages in the intermediate space between the two support ribs or with a groove on a support rib at or in the bearer (12a, 12b) and in the retracted position remains only in the U-shaped recess or shaped portion (19) of the disc (14).

5. Push carriage according to claim 2 or 4, **characterised in that** provided in the bearer (12a, 12b) or in the bearer bearing socket is a guide cam, which extends concentrically with respect to the bearing axis at a defined radius, with internally disposed detent recesses at least at the two ends offset by approximately 180° or a flat element (24) with such a guide cam (25) and detent recesses (26) is fixedly mounted at the bearer (12a, 12b) or in the bearer socket, that a pin protruding at the locking element (16) or a screwed-in screw pin (27) engages in the guide cam (25), wherein the detent recesses (26) have a depth which corresponds with the necessary displacement travel of the locking element (16) between the lower side and the pin for unlocking so that the pin (27) can be bought by displacement of the locking element (16) into the guide cam (25) and frees pivotation of the push rod (10a, 10b) together with the disc (14) coupled therewith by way of the locking element (16), that the locking element (16) is radially supported by a spring (28) at the bearer (12a, 12b) or in the bearer housing and that the spring force counteracts the displacement force to be exerted for unlocking the locking element.

6. Push carriage according to any one of the preceding claims, **characterised in that** the bearer (12a, 12b) or the bearer socket, the flat element (24), the disc (14) with the pinions (15), the locking element (16) and/or the cover (20) consists or consist of plastics material, wherein the disc (14) is a plastics material moulded part and the pinions (15) are provided only over a part region and the disc is otherwise on one side lying opposite the pinions (15) formed to be flattened or round.

7. Push carriage according to claim 1 or 2, **characterised in that** provided opposite the first pivot bearing (9a, 9b) and offset rearwardly is a pivot bearing (29) for a ram (30), which enters a sleeve (32), of a spring arrangement (31), which sleeve is rotatably mounted at the lower end on a bearing at the rear support strut (6a, 6b) or on a post (33) connecting the two rear support struts, that a compression spring (31) is provided between a slide block (34) of the bottom and an upper annular flange (35), that the compression spring (31) when the rear support strut (6a, 6b) is bought into the erected position is stressed and travels over a top dead centre to secure the erected state of the support strut (6a, 6b) and assists the pivot movement of the rear support strut (6a, 6b) during forward pivotation and bringing into the stowage position after release of a locking means or the locking element (16).

8. Push carriage according to claim 3, **characterised in that** the socket support or the bearer (12a, 12b) has a mounting depression in which a bearing projection at the disc (14) rotatably engages and that a depression for mounting a bearing pin, which protrudes at the inner side of the cover, is provided in the disc (14) or a closure pin inserted in a bore engages in the disc, which interengaging parts have centre bores for a screw connection or rivet connection.

9. Push carriage according to claim 1, **characterised in that** the lateral rear support struts (6a, 6b) are arranged at a greater spacing from one another than the front support struts (1a, 1b) in such a manner that the rear wheels (7a, 7b) in the stowage position extend laterally with respect to the front wheels (5a, 5b).

10. Push carriage according to claim 2, **characterised in that** the actuating rod (36) is displaceably guided at the upper end in the push rod (10a, 10b) at a fixedly mounted bearing block (37) and is operable by a pull cable (38), which is fastened to the actuating rod (36) by a support body (40), wherein the actuating rod (36) is actuable against the force of a spring (41) by the pull cable (38) on actuation of an actuating element (42) at the pusher or at the push yoke (11), that provided at the bearing block (37) is a curved part (43), which is movable transversely to the longitudinal axis and adjustable in depth and which co-operates with lateral curved guides, that the pull cable (38) extends therebetween and the effective length is adjustable by adjusting the curved part (43) by means of a setting screw (45) accessible through a bore in the push rod (10a, 10b).

11. Push carriage according to claim 1, **characterised in that** the two push rods (10a, 10b) are connected together by way of a push yoke (11) and that the push yoke (11) can be brought by way of lateral detent couplings (46a, 46b) into different inclined settings relative to the push rods (10a, 10b) for adaptation of the pushing height to the size of the person pushing, which detent couplings (46a, 46b) comprise two housing parts (47a, 47b, which are joined one in the other to be rotatable relative to one another and have projections for reception or fastening of a respective push rod (10a, 10b) and an end of the push yoke (11) and a passage for the pull cable (38), and that the housing parts (47a, 47b) are coupled together at one side, preferably at the inner side, by way of two socket parts which so engage one in the other that they form relative to the push rod and/or the end of the push bracket a passage channel for Bowden pulls, cable pulls or chain pulls provided for further functional rods, particularly brakes, and actuating elements.

12. Push carriage according to claim 10, **characterised in that** the transverse tube of the push yoke (11) is round and transversely divided or open at one end and the actuating element (11) is inserted in this region, that transverse pins (49a, 49b) are provided, which are guided in a longitudinal guide (50) in a connecting part or the transverse tube wall, that the ends of the cable pull (38) are fastened to the transverse pins (49a, 49b), that the sections, which protrude from the longitudinal guide (50), of the transverse pin (49a, 49b) engage in opposite sense in guide cams (54a, 54b) formed in a half-tubular shell (52) of a rotary handle (11), which is assembled from two shell parts (52, 53) and which can be placed on, and that the upper shell (53) forms at the inner side the support surfaces for the other end of the transverse pins (29a, 29b) or these are guided in guide cams formed in mirror image, wherein the guide cams (54a, 54b) are so arranged in mirror image in the lower shell (52) that through exertion of a rotation of the actuating element (42) assembled from the shells (52, 53) the pins are displaceable in the longitudinal guide (50), and that the upper shell (53) is provided with a cut-out (55) into which a push element (56) is insertable, which as rotary securing means is retractable, against the force of a spring, from a lateral recess in an annular sleeve (54) with simultaneous pressing down, whereby rotation of the actuating element is released or locked.

13. Push carriage according to claim 1, **characterised in that** the two lateral push rods (10a, 10b) are pivotable into a use setting in which they form a visual extension of the rear support struts (6a, 6b) and that in a second use setting they form a visual extension of the front support struts (1 a, 1 b).

14. Push carriage according to claim 13, **characterised in that** the coupling transmission is effective only when the push rods (10a, 10b) are pivoted out of the pivot position, in which they form a visual extension of the rear support struts (6a, 6b), forwardly beyond the front support struts (1a, 1 b).

15. Push carriage according to claim 12, **characterised in that** arranged between the transverse pins (49a, 49b) is a compression spring (63) which urges the transverse pins (49a, 49b) outwardly, in which case a thrust force can be exerted on the pull cable (38), which is preferably a wire or a wire cable.

## Revendications

1. Landau pliant pour enfant/pour poupée avec un châssis présentant au moins :
- deux entretoises avant (1a, 1b) organisées de manière symétrique sur l'axe longitudinal du landau, passant en montant de l'avant vers l'arrière, avec à leurs extrémités des supports (2 a, 2b) et/ou un élément de pont (3) de raccord avec des supports (2a, 2b) et avec des roulements (4a, 4b) de roues avant (5a, 5b) ou qui sont prévus comme roulement d'un assemblement médian de roue avant,
- deux entretoises arrière (6a, 6b) organisées de manière symétrique sur l'axe longitudinal du landau, passant en montant de l'arrière à l'avant, avec à leurs extrémités des supports avec des roulements pour les roues arrière (7a, 7b) ou pour fixer un assemblement avec un axe (8) avec des roues arrière (7a, 7b) enfichables dessus sur le côté externe,
- paliers d'articulation blocables, situés des deux côtés qui permettent un basculement relatif des entretoises avant (1a, 1b) et arrière (6a, 6b) les unes contre les autres et de les placer aussi bien dans une position montée de transport que dans une position pliée de rangement,
- deux coulisseaux (10 a, 10b) situés en amont, penchés vers le haut et posés sur les premiers paliers d'articulation (9a, 9b) dont les extrémités supérieures présentent des poignées coulissantes ou un arceau coulissant de raccord (11) et pour lesquels
- les entretoises avant (1a, 1b) sont fixées sur des porteurs (12a, 12 b),
- sur chacun des porteurs latéraux (12a, 12b), il se trouve un premier palier d'articulation (9a, 9b) pour un coulisseau (10a, 10b), le coulisseau (10a, 10b) pouvant être bloqué au moins dans la position de coulissement,
- sur chacun des porteurs (12a, 12b), un second palier d'articulation (13a, 13b) décalé vers le bas est prévu pour l'entretoise arrière correspondante (6a, 6b), un moyen de sécurisation de l'entretoise (6a, 6b) étant au moins prévu dans la position montée, pour lesquels,
- les coulisseaux (10a, 10b) peuvent être basculés vers l'avant dans la direction des entretoises avant (1a, 1b),
- chacune des entretoises arrière (6a, 6b) peut être basculée via les seconds paliers d'articulation (13a, 13b) vers l'avant dans une position de rangement,
- entre le premier palier d'articulation (9a, 9b) un entraînement de couplage est prévu pour le coulisseau (10a, 10b) et le second palier d'articulation (13a, 13b) pour l'entretoise arrière (6a, 6b),
- l'entraînement de couplage est réalisé de sorte que lors du basculement des coulisseaux (10a, 10b) de la position de coulissement pour rallonger les entretoises avant (1a, 1b) en direction des entretoises avant (1a, 1b), on passe par un premier espace de coulissement dans lequel aucun mouvement de transformation n'a lieu et ensuite seulement, une transformation souhaitée de mouvement rotatif fait basculer les entretoises arrière (6a, 6b) automatiquement vers l'avant en direction de la roue avant (5a, 5b), l'entraînement de couplage présentant un disque (14) avec roulement rotatif situé sur l'axe de basculement du premier palier d'articulation (9a, 9b) pour le coulisseau (10a, 10b) avec des pignons (15) partiellement prévus sur la circonférence du disque qui tourne avec un entraîneur (16) fixé sur le coulisseau (10a, 10b) lorsque l'on tourne le coulisseau (10a, 10b), les pignons (15) s'insèrent seulement dans l'engrenage adapté aux contours (18) d'au moins une couronne à dents segmentée (17) sur l'entretoise arrière (6a, 6b) lorsque les coulisseaux (10a, 10b) basculent de la position de coulissement pour rallonger les entretoises arrière (6a, 6b) vers les entretoises avant (1a, 1b), l'entretoise arrière (6a, 6b) étant fixé sur la couronne à dents (17) et la couronne à dents étant fixée sur le second palier d'articulation (13a, 13b).

2. Landau selon la revendication 1 caractérisé en cela que l'entraîneur (16) est un élément de verrouillage qui est situé de manière coulissant sur le côté adjacent du coulisseau (10a, 10b) en amont et est tenu aussi bien dans une fente en forme de U ou dans une fente (19) sur le disque (14) de l'entraînement de couplage qu'au moins dans la position de coulissement inférieure entre deux nervures du porteur ou sur une nervure avec une fente de façon à ne pas se décaler, et en cela que l'élément de verrouillage est accessible par l'extérieur et peut être utilisé par une barre d'actionnement (36) dans les coulisseaux (10a, 10b) ou par un câble Bowden et/ou un câble de traction.

3. Landau selon la revendication 1 caractérisé en cela que le porteur (12a, 12b) présente la forme d'une coque de roulement avec une fente de roulement et/ou des boulons pour le roulement d'au moins le disque (14) avec les pignons (15) et pour la fixation d'un caisson (20) du palier d'articulation (9a, 9b) montable, adapté aux contours, pouvant être décalé relativement, en forme de couvercle, sur lequel les coulisseaux (10a, 10b) sont fixés sur le côté externe ou contre ou dans une embase (21), laquelle coque de roulement (12a, 12b) peut être reliée avec le caisson (20) par des vis centriques ou par des rivets avec une sécurisation simultanée du roulement rotatif du disque (14) avec les pignons (15), et en cela que les porteurs (12a, 12b) présentent un logement (22) et/ou une embase s'étendant de manière radiale pour fixer les entretoises avant (1b) et une embase s'étendant de manière radiale (23) avec le palier d'articulation (13a, 13b) pour les entretoises arrière (6a, 6b).

4. Landau selon la revendication 2 ou 3 caractérisé en cela que le caisson du coulisseau présente une percée de roulement parallèle à l'axe, en longueur ou une chambre de roulement pour l'élément de verrouillage (16) et que l'élément de verrouillage (16) est conduit dessus et s'insère dans la fente en U ou la forme en U (19) sur le disque (14), les longueurs de la percée du roulement ou de la chambre de roulement et celles de la fente en U étant suffisamment grandes pour que dans la position de coulissement inférieure l'élément de verrouillage (16) s'insère dans l'interstice entre les deux nervures ou avec une fente sur une nervure ou dans les porteurs (12a, 12b) et reste dans la position déclenchée uniquement dans la fente en forme de U ou la forme (19) du disque (14).

5. Landau selon la revendication 2 ou 4 caractérisé en cela que dans les porteurs (12a, 12b) ou dans la coque de roulement du porteur une courbe directrice passant dans un rayon précis de manière concentrique à l'axe de roulement est prévu avec des fentes d'enclenchement intérieure au moins sur les deux extrémités renversés à env. 180° ou un élément de surface (20) est monté fixement avec une telle ligne directrice (25) et des fentes d'enclenchement (26) sur les porteurs (12a, 12b) ou dans la coque du porteur, et en cela que dans la courbe directrice (25) un boulon en amont de l'élément de verrouillage (16) ou un boulon vissé (27) s'insère, les fentes d'enclenchement (26) présentant une profondeur correspondant à la voie de coulissement nécessaire de l'élément de verrouillage (16) entre le côté inférieur et le boulon pour le déverrouillage afin que le boulon (27) puisse être placé dans la courbe directrice (25) par le coulissement de l'élément de verrouillage (16) et autorise un basculement des coulisseaux (10a, 10b) avec le disque (14) ainsi couplé par l'élément de verrouillage (16), et en cela que l'élément de verrouillage (16) est soutenu de manière radiale par un ressort (28) sur les porteurs (12a, 12b) ou dans un boîtier de porteur et que la force du ressort contre la force de coulissement à exercer pour déverrouiller l'élément de verrouillage.

6. Landau selon l'une des revendications précédentes caractérisé en cela que les porteurs (12a, 12b) et la coque du porteur, l'élément de surface (24), le disque (14) avec les pignons (15), l'élément de verrouillage (16) et/ou le cache (20) sont en plastique, le disque (14) étant une pièce formée en plastique et les pignons (15) étant uniquement prévus sur un espace partiel et le disque étant aplati ou arrondi de plus sur un côté en face des pignons (15).

7. Landau selon la revendication 1 ou 2 caractérisé en cela qu'en face des premiers paliers d'articulation (9a, 9b) un palier d'articulation (29) décalé vers l'arrière est prévu pour un pilon (30) d'un assemblement de ressort (31) qui plonge dans une douille (32) qui est située de manière rotative sur le côté du bas sur un roulement des entretoises arrière (6a, 6b) ou sur une traverse (33) reliant les deux entretoises arrière, de sorte qu'entre une pierre coulissante (34) du côté du fond et une bague supérieure (35) un ressort de pression (31) est prévu, de sorte que le ressort de pression (31) se tende lors du passage des entretoises arrière (6a, 6b) dans la position de montage et sécurise le montage des entretoises (6a, 6b) en passant par un point mort et aide le mouvement de basculement des entretoises arrière (6a, 6b) lors du basculement préliminaire et du déplacement dans la position de rangement après suppression d'un verrouillage ou d'un élément de verrouillage (16).

8. Landau selon la revendication 3 caractérisé en cela que le porteur de coque ou les porteurs (12a, 12b) présentent un renfoncement de palier dans lequel l'embase de palier s'insère de manière rotative dans le disque (14) et que dans le disque (14), un renfoncement est prévu pour le roulement d'un pignon de roulement situé en amont sur le côté interne du cache ou qu'un pignon de fermeture situé dans un alésage s'insère les pièces s'insérant les unes dans les autres présentant des alésages centriques pour une connexion à vis ou à rivet.

9. Landau selon la revendication 1 caractérisé en cela que les entretoises arrière latérales (6a, 6b) sont situées à une plus grande distance l'une de l'autre que les entretoises avant (1a, 1b) de sorte que les roues arrières (7a, 7b) passent dans la position de rangement de manière latérale par rapport aux roues avant (5a, 5b).

10. Landau selon la revendication 2 caractérisé en cela que la barre d'actionnement (36) est située de manière à coulisser en haut sur les coulisseaux (10a, 10b) sur un bloc de roulement (37) monté fixement et peut être utilisée avec un câble de traction (38) qui est fixé sur la barre d'actionnement (36) d'un corps d'appui (40), la barre d'actionnement (36) pouvant être actionnée contre la force d'un ressort (41) du câble de traction (38) en actionnant un élément d'actionnement (42) sur le coulisseau ou l'arceau coulissant (11), de sorte que sur le bloc de roulement (37) une pièce en arceau (43) mobile en travers de l'axe longitudinal et réglable en profondeur est prévu qui agit avec les guidages d'arceau latéraux de sorte que le câble de traction (38) passe au milieu et que la longueur d'action soit ajustable en réglant la pièce en arceau (43) à l'aide d'une vis de réglage (45) accessible par un alésage dans les coulisseaux (10a, 10b).

11. Landau selon la revendication 1 caractérisé en cela que les deux coulisseaux (10a, 10b) sont reliés ensemble par un arceau coulissant (11) et que l'arceau coulissant (11) peut être déplacé en face des coulisseaux (10a, 10b) par les couplages d'insertion latéraux (46a, 46b) dans les différentes positions inclinées pour ajuster la hauteur de coulissement à la taille de la personne qui fait coulisser, les couplages d'insertion (46a, 46b) présentant deux pièces de boîtier (47a, 47b) qui sont insérées l'une dans l'autre de manière à pouvoir se décaler de manière relative et qui présente des embases de logement ou de fixation d'un coulisseau (10a, 10b) ou de l'extrémité d'un arceau coulissant (11) et une percée pour la corde de traction (38) de sorte que les pièces de boîtier (47a, 47b) sont couplées sur un côté, de préférence sur le côté interne par deux pièces de coque qui s'insèrent l'une dans l'autre de sorte qu'elles forment en face du coulisseau et/ou de l'extrémité de l'arceau coulissant un canal de passage pour câbles Bowden, câbles de traction ou chaînes qui sont prévus pour les autres barres de fonction, notamment les freins et les éléments de commande.

12. Landau selon la revendication 10 caractérisé en cela que le tube transversal de l'arceau coulissant (11) est rond et partagé en travers ou ouvert sur un côté et dans cet espace l'élément d'actionnement 11 est inséré, de sorte que des boulons transversaux (49a, 49b) sont prévus et passent dans un guidage en longueur (50) dans une pièce de liaison ou dans la paroi du tube transversal, de sorte que sur les boulons transversaux (49a, 49b), les extrémités du câble de traction (38) sont fixées, de sorte que les sections des boulons transversaux (49a, 49b)en amont du guidage en longueur (50) s'insèrent de manière opposée dans une coque en forme de demi-tube (52) d'une poignée rotative (11) formée à partir de deux parties de coque (52, 53) avec les courbes directrices (54a, 54b) intégrées et que la coque supérieur (53) forme à l'intérieur les surfaces d'appui pour les autres extrémités des boulons transversaux (49a, 49b) ou que celles-ci passent dans les courbes directrices installées de manière symétriques, les courbes directrices (54a, 54b) étant situées de manière symétrique dans la coque inférieure (52) de sorte qu'en exerçant une rotation de l'élément d'actionnement (42) assemblé à partir des coques (52, 53), les boulons peuvent être coulissés dans le guidage en longueur (50) et que la coque supérieure (50) possède une saillie (55) dans laquelle un élément de coulissement (56) peut être placé qui peut être déplacé en tant que sécurité de rotation contre la force d'un ressort issu d'une fente latérale dans une douille (57) en appuyant en même temps, la rotation de l'élément d'actionnement étant libérée ou bloquée.

13. Landau selon la revendication 1 caractérisé en cela que les deux coulisseaux latéraux (10a, 10b) peuvent être basculés dans une position d'utilisation dans laquelle ils forment une rallonge optique des entretoises arrière (6a, 6b) de sorte qu'ils forment dans une seconde position d'utilisation une rallonge optique des entretoises avant (1a, 1b).

14. Landau selon la revendication 13 caractérisé en cela que l'entraînement de couplage est uniquement actif lorsque les coulisseaux (10a, 10b) de la position de basculement sont basculés vers l'avant au-dessus des entretoises avant (1a, 1b) en formant une rallonge optique avec les entretoises arrière (6a, 6b).

15. Landau selon la revendication 12 caractérisé en cela qu'entre les boulons transversaux (49a, 49b) un ressort de pression (63) est situé qui appuie vers l'extérieur les boulons transversaux (49a, 49b) une force de coulissement pouvant être exercée sur la corde de traction (38) qui est de préférence un fil ou un câble.
